(19) Europäisches Patentamt
European Patent Office
Office européen des brevets

(11) **EP 4 575 928 A1**

(12) **EUROPEAN PATENT APPLICATION**

(43) Date of publication:
**25.06.2025 Bulletin 2025/26**

(21) Application number: **24220403.0**

(22) Date of filing: **17.12.2024**

(51) International Patent Classification (IPC):
*G06N 10/60* (2022.01)

(52) Cooperative Patent Classification (CPC):
**G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.12.2023 IN 202321087616**

(71) Applicant: **Tata Consultancy Services Limited Maharashtra (IN)**

(72) Inventors:
• **MUKHERJEE, Anirban**
 **400096 Mumbai (IN)**
• **GOPAL, Ananthakrishna**
 **400096 Mumbai (IN)**
• **BANERJEE, Ritam**
 **400096 Mumbai (IN)**

(74) Representative: **Goddar, Heinz J.**
 **Boehmert & Boehmert**
 **Anwaltspartnerschaft mbB**
 **Pettenkoferstrasse 22**
 **80336 München (DE)**

(54) **IMPLEMENTING DENSITY FUNCTIONAL THEORY ON QUANTUM PROCESSORS THROUGH LOCAL DENSITY APPROXIMATION FOR SIMULATING CHEMICAL COMPOUNDS**

(57) The disclosure relates generally to methods and systems for implementing density functional theory on quantum processors through local density approximation for simulating chemical compounds. Conventional methods implement the DFT simulations on classical processors which is time consuming. According to the present disclosure, initially a plurality of atomic coordinates of each atom of a given chemical compound whose one or more properties to be extracted, are obtained. Electron integrals, a core Hamiltonian, and a collocation matrix are computed from the plurality of atomic coordinates. The core Hamiltonian is diagonalized to obtain an initial density matrix of the chemical compound. The initial density matrix is further updated iteratively until a convergence criteria is satisfied using a local density approximation (LDA) to obtain a final density matrix. The final density matrix is used to extract the one or more properties of the chemical compound.

FIG. 2

EP 4 575 928 A1

**Description**

CROSS-REFERENCE TO RELATED APPLICATIONS AND PRIORITY

The present application claims priority to Indian application no. 202321087616, filed on December 21, 2023.

TECHNICAL FIELD

The disclosure herein generally relates to chemical compounds, and, more particularly, to methods and systems for implementing density functional theory on quantum processors through local density approximation for simulating chemical compounds.

BACKGROUND

Companies in the field of pharma or material sciences have successfully synthesized and predicted several million chemical compounds for practical use. These chemical compounds have been listed across various curated databases. Each molecule in the chemical compound and its associated conformations has several properties such as solubility, stability, binding energy, electron density, atomic spectra, reaction rates, scattering cross-section, response properties and the like. Computing these properties and updating them in the curated databases for future use is performed in the field of classical computational chemistry. All the classical computational chemistry approaches rely on quantum chemistry calculations for describing the electronic density distribution profile which needs to be calculated at different physical conditions. The most practical computations in the pharma and material science field today are carried out by the Kohn Sham (KS)-Density Functional Theory (DFT) and the Hartree-Fock (HF) approach. DFT has achieved a permanent workhorse status to be the primary starting point for simulating molecules and solids.

Most industrially relevant chemical systems in the material sciences industry are bulk materials. One supercell made from a collection of neighboring unit cells involves around thousands of atoms which corresponds to several thousands of electronic orbitals even in the least correlated basis. Currently these chemical systems are treated approximately within the Quantum Mechanical (QM) or Molecular Mechanical (MM) approach, where only a subsystem with strong quantum correlations is simulated using DFT and the rest is treated only via the MM technique. Identifying these subsystems requires doing prior MM and/or force field analysis that adds to additional overhead cost. The gap in applying this DFT technology to the complete system arises from the quartic and cubic scaling wall bottleneck i.e. for a 50000 electronic orbital system (corresponding to a supercell of the bulk material), computing even one KS-DFT step would require 0.001 secs on the FUGAKU- the world's second most powerful supercomputer with a $R_{max}$ of 442 PETA Flops. For all practical purposes the DFT code should converge within 100 self-consistency steps therefore to simulate one large supercell on FUGAKU would require 0.1 seconds. For real world simulations of chemical compounds, one would require screening across several lakhs of molecular configurations in a supercell and that would require more than one day. The output electronic density computed from DFT needs to be in turn passed into Force-Field or MM modelling suites that then recomputes the geometric positioning of atoms and the DFT energies needs to be recomputed. Hence, for a bit larger system such calculations can enter several days of calculations even on the largest of the supercomputers. Similarly, the chemical systems in the Pharma industry that correspond to Protein-drug or Protein-Protein systems involve thousands of atoms which corresponds to a several thousands of electronic orbitals. These chemical systems are treated approximately within the QM or MM approach, only a subsystem is treated with strong quantum correlations and is simulated using DFT and the rest is treated only via the MM technique. Even the drug molecules in the pharma industry have more than 500 molecular weights, therefore screening across different drug molecules enters across several days of efforts.

DFT, although being a mature technology, has a tremendous bottleneck. If an algorithm can reduce the time computational complexity of DFT for general chemical systems even nominally from cubic to quadratic or linear then several days of calculations can be reduced to a few days or within a day. This will enable faster and more screening in a short duration of time, handling larger QM regions and reduce the product discovery time drastically. In the conventional KS-DFT, the computational complexity scales cubically to the system size which is the consequence of the delocalized nature of the wave functions which are the eigen solutions of the Kohn-Sham single particle Hamiltonian. To scale the DFT calculations to large systems, there have been attempts to develop an algorithm which scales linearly with system size. One such technique is Order-N Electronic Total Energy Package (ONETEP). It uses a basis of non-orthogonal generalized Wannier functions (NGWFs) expressed in terms of periodic cardinal sine (psinc) functions, which are in turn equivalent to a basis of plane-waves. ONETEP therefore is a combination of the benefits of linear scaling with a level of accuracy and variational bounds comparable to that of traditional cubic-scaling plane-wave approaches. During the calculation, the density matrix and the NGWFs are optimized with localization constraints. ONETEP optimizes the total energy of the system, ensuring self-consistent convergence of electronic structure. However, ONETEP is primarily designed for periodic systems, which can restrict its application to certain materials and structures. Although ONETEP is efficient for large systems, there are still practical limitations to the system size that can be treated, and the method may not be suitable for extremely large systems. Overall, ONETEP is a powerful and efficient method for performing large-scale DFT calculations in condensed matter physics and materials science. Its linear scaling and localized orbital approach make it well-suited for studying complex materials, but its application is primarily limited to periodic systems.

Currently the efforts are towards speeding up the DFT calculations using Exa scale computing: central processing unit (CPU), graphic processing unit (GPU), Multiprocessing etc. However, all of these have memory and processing limitations. As quantum hardware and algorithms continue to develop, various industry sectors, particularly the pharmaceutical and material design domains, are applying quantum computation paradigm to their specific problems. There have been attempts made to implement DFT on a combination of classical and quantum processors, for example, US20220012382A1 which implements DFT on a classical processor and optimizes the DFT results on a quantum processor. However, the complex calculations are still performed on a classical processor which doesn't overcome the above-mentioned bottlenecks in the DFT calculations.

SUMMARY

Embodiments of the present disclosure present technological improvements as solutions to one or more of the above-mentioned technical problems recognized by the inventors in conventional systems.

In an aspect, a processor-implemented method for implementing density functional theory on quantum processors through local density approximation for simulating chemical compounds is provided. The method including the steps of: receiving a chemical compound whose one or more properties to be extracted, wherein the chemical compound is one of (i) a molecule, and (ii) a solid; obtaining a plurality of atomic coordinates of each of a plurality of atoms present in the chemical compound; determining (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension $N_g$ and $N_{ao}$, and wherein $N_g$ represents a number of points on a numerical grid, and $N_{ao}$ represents a number of basis functions; determining an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies; iteratively updating the initial density matrix until a convergence criteria is met, to obtain an final density matrix of the chemical compound, wherein iteratively updating the initial density matrix at each iteration comprises: (a) computing a direct (J) matrix from the initial density matrix; (b) determining a correlation exchange matrix based on the collocation matrix and the initial density matrix for local density approximation (LDA) by: (i) encoding the collocation matrix on (a) a plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix; (ii) composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block; (iii) composing the third quantum circuit block with the quantum circuit block for diffusion and the first quantum circuit block that encoded the collocation matrix, to construct a fourth quantum circuit block that encodes an electronic density of the chemical compound; (iv) putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density; (v) composing the sixth quantum circuit block with the first quantum circuit block, to create a seventh quantum circuit block that encodes a Z matrix; and (vi) composing the seventh quantum circuit block with the first quantum circuit block, to create an eighth quantum circuit block that encodes the correlation exchange matrix; (c) determining a Fock (F) matrix by adding the J matrix and the correlation exchange matrix; (d) performing a qubitized diagonalization of the F matrix to obtain an intermediate density matrix; and (e) repeating the steps (a) through (d), until the convergence criteria is met, by considering the intermediate density matrix as the initial density matrix, to obtain the final density matrix of the chemical compound; and utilizing the final density matrix of the chemical compound, to extract the one or more properties of the chemical compound.

In another aspect, a system for implementing density functional theory on quantum processors through local density approximation for simulating chemical compounds provided. The system includes: one or more classical hardware processors and a plurality of unentangled quantum processors, wherein the one or more classical hardware processors are communicably coupled to the plurality of unentangled quantum processors by respective interfaces, wherein the one or more classical hardware processors are communicably coupled to at least one memory storing programmed instructions; one or more Input /Output (I/O) interfaces; and the plurality of unentangled quantum processors are operatively coupled to the at least one quantum memory, wherein the one or more classical hardware processors and the plurality of unentangled quantum processors are configured by the programmed instructions to: receive a chemical compound whose one or more properties to be extracted, wherein the chemical compound is one of (i) a molecule, and (ii) a solid; obtain a plurality of atomic coordinates of each of a plurality of atoms present in the chemical compound; determine (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension $N_g$ and $N_{ao}$, and wherein $N_g$ represents a number of points on a numerical grid, and $N_{ao}$ represents a number of basis functions; determine an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies; iteratively update the initial density matrix until a convergence criteria is met, to obtain an final density matrix of the chemical compound, wherein iteratively updating the initial density matrix at each iteration comprises: (a) computing a direct (J) matrix from the initial density matrix; (b) determining a correlation exchange matrix based on the collocation matrix and the initial density matrix for local density approximation (LDA) by: (i) encoding the collocation matrix on (a) a plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix; (ii) composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block; (iii) composing the third quantum circuit block with the quantum circuit block for diffusion and the first quantum circuit block that encoded the collocation matrix, to construct a fourth quantum circuit block that encodes an electronic density of the chemical compound; (iv) putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density; (v) composing the sixth quantum circuit block with the first quantum circuit block, to create a seventh quantum circuit block that encodes a Z matrix; and (vi) composing the seventh quantum circuit block with the first quantum circuit block, to create an eighth quantum circuit block that encodes the correlation exchange matrix; (c) determining a Fock (F) matrix by adding the J matrix and the correlation exchange matrix; (d) performing a qubitized diagonalization of the F matrix to obtain an intermediate density matrix; and (e) repeating the steps (a) through (d), until the convergence criteria is met, by considering the intermediate density matrix as the initial density matrix, to obtain the final density matrix of the chemical compound; and utilize the final density matrix of the chemical compound, to extract the one or more properties of the chemical compound.

In yet another aspect, there are provided one or more non-transitory machine-readable information storage mediums comprising one or more instructions which when executed by one or more hardware processors cause: receiving a chemical compound whose one or more properties to be extracted, wherein the chemical compound is one of (i) a molecule, and (ii) a solid; obtaining a plurality of atomic coordinates of each of a plurality of atoms present in the chemical compound; determine (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension $N_g$ and $N_{ao}$, and wherein $N_g$ represents a number of points on a numerical grid, and $N_{ao}$ represents a number of basis functions; determining an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies; iteratively updating the initial density matrix until a convergence criteria is met, to obtain an final density matrix of the chemical compound, wherein iteratively updating the initial density matrix at each iteration comprises: (a) computing a direct (J) matrix from the initial density matrix; (b) determining a correlation exchange matrix based on the collocation matrix and the initial density matrix for local density approximation (LDA) by: (i) encoding the collocation matrix on (a) a plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix; (ii) composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block; (iii) composing the third quantum circuit block with the quantum circuit block for diffusion and the first quantum circuit block that encoded the collocation matrix, to construct a fourth quantum circuit block that encodes an electronic density of the chemical compound; (iv) putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density; (v) composing the sixth quantum circuit block with the first quantum circuit block, to create a seventh quantum circuit block that encodes a Z matrix; and (vi) composing the seventh quantum circuit block with the first quantum circuit block, to create an eighth quantum circuit block that encodes the correlation exchange matrix; (c) determining a Fock (F) matrix by adding the J matrix and the correlation exchange matrix; (d) performing a qubitized diagonalization of the F matrix to obtain an intermediate density matrix; and (e) repeating the steps (a) through (d), until the convergence criteria is met, by considering the intermediate density matrix as the initial density matrix, to obtain the final density matrix of the chemical compound; and utilizing the final density matrix of the chemical compound, to extract the one or more properties of the chemical compound.

In an embodiment, computing the J matrix from the initial density matrix comprises: encoding the initial density matrix on (a) the plurality of control qubits composed of a third set of qubits and a fourth set of qubits, and (b) the plurality of ancilla qubits, to obtain a ninth quantum circuit block, wherein the third set of qubits is associated with a number of auxiliary basis functions in density fitting approximation of the plurality electron integrals, the fourth set of qubits is associated with the number of basis functions, and the plurality of ancilla qubits are used to store numerical entries of the initial density matrix; encoding a Cholesky tensor on the ninth quantum circuit block to form a first Cholesky circuit block, wherein the Cholesky tensor is obtained from one or more electron integrals among the plurality of electron integrals; composing the ninth quantum circuit block with the first Cholesky circuit block and a diffusion operator to create a tenth quantum circuit block that processes the initial density matrix to generate an intermediate state vector; encoding a transpose of the Cholesky tensor on the tenth quantum circuit block to form a second Cholesky circuit block; composing the tenth quantum circuit block with the second Cholesky circuit block for processing the intermediate state vector to obtain a plurality of states at the fourth set of qubits in the ninth quantum circuit block; and reading one or more sequences of bitstrings from the fourth set of qubits to obtain the direct matrix.

In an embodiment, computing the J matrix from the initial density matrix further comprises performing amplitude amplification on the one or more sequences of bitstrings if there is overlap between the plurality of states.

In an embodiment, the convergence criteria is met when norm of a difference between the intermediate density matrix at a current iteration and the initial density matrix at a previous iteration is lesser than a predefined threshold.

In an embodiment, (i) the plurality of control qubits composed of the first set of qubits and the second set of qubits, and (ii) the plurality of ancilla qubits, to obtain the first quantum circuit block, are mathematically represented as:

$$\log N_g + \log N_{ao} + n\ qubits$$

wherein $\log N_g$ represents the first set of qubits, $\log N_{ao}$ represents the second set of qubits, and $n\ qubits$ represents the plurality of ancilla qubits.

In an embodiment, (a) the plurality of control qubits composed of the third set of qubits and the fourth set of qubits, and (b) the plurality of ancilla qubits, to obtain the ninth quantum circuit block, are mathematically represented as:

$$\log N_{aux} + 2\log N_{ao} + n\ qubits$$

wherein $\log N_{aux}$ represents the third set of qubits, $2\log N_{ao}$ represents the second set of qubits, and $n\ qubits$ represents the plurality of ancilla qubits.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is a functional block diagram of a system for implementing density functional theory on quantum processors through local density approximation for simulating chemical compounds, in accordance with some embodiments of the present disclosure.

FIG. 2 is an exemplary flow diagram illustrating a method for implementing density functional theory on quantum processors through local density approximation for simulating chemical compounds, implemented by the system of FIG. 1, in accordance with some embodiments of the present disclosure.

FIGS. 3A-3B are flowcharts showing the steps for iteratively updating the initial density matrix at each iteration, in accordance with some embodiments of the present disclosure.

FIG. 4 is an exemplary direct matrix quantum circuit block, in accordance with some embodiments of the present disclosure.

FIG. 5 is a flowchart showing the steps for computing the J matrix from the initial density matrix, in accordance with some embodiments of the present disclosure.

FIG. 6 is an exemplary fourth quantum circuit block that encodes an electronic density of the chemical compound, in accordance with some embodiments of the present disclosure.

FIG. 7 is an exemplary eighth quantum circuit block that encodes the correlation exchange matrix, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

As quantum hardware and algorithms continue to develop, various industry sectors, particularly the pharmaceutical and material design domains, are applying quantum computation paradigm to their specific problems. For example, many chemical compounds are synthesized and predicted for practical use. Current software packages calculate the energetics and other physical properties of physical/chemical systems using a quantum mechanical (QM) electronic self-consistent field approach called the Kohn-Sham Density functional theory (KS-DFT). However, the computational time complexity bottleneck of the DFT approach has remained a cubic function of the number of electronic orbitals. This is also known as the cubic scaling wall bottleneck in DFT. Further, conventional methods implement the DFT simulations on classical processors such as central processing unit (CPU), graphical processing unit (GPU), etc. which is time consuming. Some state-of-the-art techniques implement DFT on a combination of classical and quantum processors. However, the complex calculations are still performed on a classical processor which doesn't overcome the bottlenecks in DFT calculations.

The present disclosure provides methods and systems for implementing density functional theory on quantum processors through local density approximation for simulating chemical compounds, to solve the above-mentioned bottlenecks in the conventional techniques for the DFT simulations. More specifically, the present disclosure provides a quantum circuit for computing the direct ($J$) matrix efficiently on a quantum processor. Initially, a plurality of atomic coordinates of each atom of a given chemical compound whose one or more properties to be extracted are obtained. Electron integrals, a core Hamiltonian, and a collocation matrix are computed from the plurality of atomic coordinates. The core Hamiltonian is diagonalized to obtain an initial density matrix of the chemical compound which is further updated iteratively until a convergence criteria is satisfied, using a local density approximation (LDA), to obtain a final density matrix of the chemical compound. At each iteration, a direct matrix is computed from the initial density matrix, a correlation exchange matrix is computed from the direct matrix and the collocation matrix for the local density approximation (LDA), a Fock matrix is computed by adding the direct matrix and the correlation exchange matrix, and then the Fock matrix is diagonalized to obtain an intermediate density matrix which is used in subsequent iteration. This is repeated until norm of a difference between the intermediate density matrix at a current iteration and the initial density matrix at a previous iteration is lesser than a predefined threshold to obtain the final density matrix of the chemical compound which exhibits the desired properties.

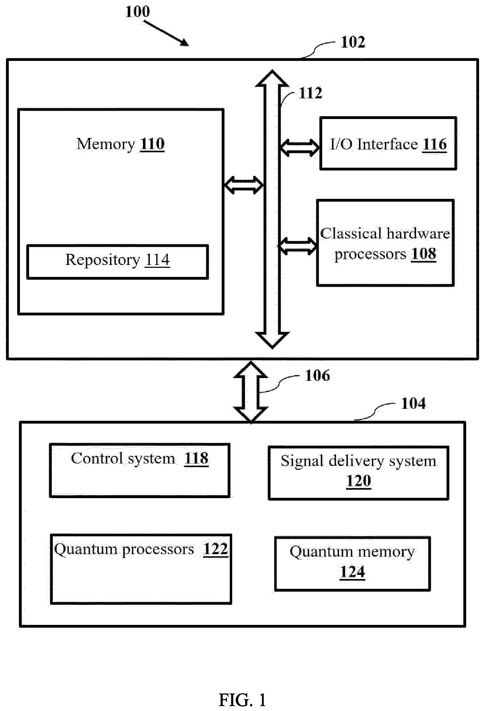

Referring now to the drawings, and more particularly to FIG. 1 through FIG. 7. where similar reference characters denote corresponding features consistently throughout the figures, there are shown preferred embodiments and these embodiments are described in the context of the following exemplary system and/or method.

FIG. 1 is a functional block diagram of a system 100 for implementing density functional theory on quantum processors through local density approximation for simulating chemical compounds, in accordance with some embodiments of the present disclosure. The system 100 includes a classical computing system 102, a quantum computing system 104 and a communication interface 106.

The classical computing system 102 comprises one or more classical hardware processors 108, at least one memory such as a memory 110, and an I/O interface 116. The one or more classical hardware processors 108, the memory 110, and the Input /Output (I/O) interface 116 may be coupled by a system bus such as a system bus 112 or a similar mechanism. In an embodiment, the one or more classical hardware processors 108 can be one or more hardware processors. The one or more classical hardware processors and the hardware processors are interchangeably used throughout the document. Similarly, the classical computing system 102 is a normal computing system.

The I/O interface 116 may include a variety of software and hardware interfaces, for example, a web interface, a graphical user interface, and the like., for example, interfaces for peripheral device(s), such as a keyboard, a mouse, an external memory, a printer and the like. Further, the I/O interface 116 may enable the system 100 to communicate with other devices, such as web servers, and external databases. The I/O interface 116 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 116 may include one or more ports for connecting several computing systems with one another or to another server computer.

The one or more hardware processors 108 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 108 is configured to fetch and execute computer-readable instructions stored in the memory 110.

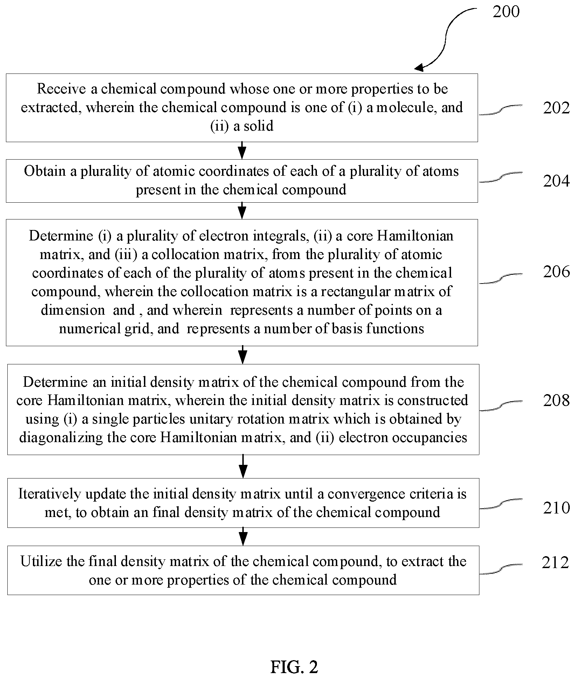

The memory 110 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 110 includes a data repository 114. The data repository (or repository) 114 may include a plurality of abstracted pieces of code for refinement and data that is processed, received, or generated as a result of the execution of the method illustrated in FIG. 2. Although the data repository 114 is shown internal to the system 100, it should be noted that, in alternate embodiments, the data repository 114 can also be implemented external to the system 100, where the data repository 114 may be stored within a database (repository 114) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

The quantum computing system 104 shown in FIG. 1 includes a control system 118, a signal delivery system 120, a plurality of quantum processors (alternatively referred as Quantum Processing Units (QPUs)) 122, and a quantum memory 124. The plurality of quantum processors 122 are unentangled and hence alternatively referred as the plurality of unentangled quantum processors 122. The quantum computing system 104 may include additional or different features, and the components of a quantum computing system 104 may operate as described with respect to FIG. 1 or in alternative manner.

In an embodiment, the quantum computing system 104 can perform quantum computational tasks (such as, for example, quantum simulations or other quantum computational tasks) by executing quantum algorithms. In some implementations, the quantum computing system 104 can perform quantum computation by storing and manipulating information within individual quantum states of a composite quantum system. For example, Qubits (i.e., Quantum bits) can be stored in and represented by an effective two-level sub-manifold of a quantum coherent physical system in the plurality of unentangled quantum processors 122. In an embodiment, the quantum computing system 104 can operate using gate-based models for quantum computing. For example, the Qubits can be initialized in an initial state, and a quantum logic circuit comprised of a series of quantum logic gates can be applied to transform the qubits and extract measurements representing the output of the quantum computation.

The plurality of unentangled quantum processors 122 shown in FIG. 1 may be implemented, for example, as a superconducting quantum integrated circuit that includes Qubit devices. The Qubit devices may be used to store and process quantum information, for example, by operating as ancilla Qubits, data Qubits or other types of Qubits in a quantum algorithm. Coupler devices in the superconducting quantum integrated circuit may be used to perform quantum logic operations on single qubits or conditional quantum logic operations on multiple qubits. In some instances, the conditional quantum logic can be performed in a manner that allows large-scale entanglement within the plurality of unentangled quantum processors 122. Control signals may be delivered to the superconducting quantum integrated circuit, for example, to manipulate the quantum states of individual Qubits and the joint states of multiple Qubits. In some instances, information can be read from the superconducting quantum integrated circuit by measuring the quantum states of the qubit devices. The plurality of unentangled quantum processors 122 may be implemented using another type of physical system.

The plurality of unentangled quantum processors 122, and in some cases all or part of the signal delivery system 120, can be maintained in a controlled cryogenic environment. The environment can be provided, for example, by shielding equipment, cryogenic equipment, and other types of environmental control systems. In some examples, the components in the plurality of unentangled quantum processors 122 operate in a cryogenic temperature regime and are subject to very low electromagnetic and thermal noise. For example, magnetic shielding can be used to shield the system components from stray magnetic fields, optical shielding can be used to shield the system components from optical noise, thermal shielding and cryogenic equipment can be used to maintain the system components at controlled temperature, etc.

In an embodiment, the signal delivery system 120 provides communication between the control system 118 and the plurality of unentangled quantum processors 122. For example, the signal delivery system 120 can receive control signals from the control system 118 and deliver the control signals to the plurality of unentangled quantum processors 122. In some instances, the signal delivery system 120 performs preprocessing, signal conditioning, or other operations to the control signals before delivering them to the plurality of unentangled quantum processors 122. In an embodiment, the signal delivery system 120 includes connectors or other hardware elements that transfer signals between the plurality of unentangled quantum processors 122 and the control system 118. For example, the connection hardware can include signal lines, signal processing hardware, filters, feedthrough devices (e.g., light-tight feedthroughs, etc.), and other types of components. In some implementations, the connection hardware can span multiple different temperature and noise regimes. For example, the connection hardware can include a series of temperature stages that decrease between a higher temperature regime (e.g., at the control system 118) and a lower temperature regime (e.g., at the plurality of unentangled quantum processors 122).

In an embodiment, the control system 118 controls operation of the plurality of unentangled quantum processors 122. For example, the control system 118 may include data processors, signal generators, interface components and other types of systems or subsystems. Components of the example control system 118 may operate in a room temperature regime, an intermediate temperature regime, or both. For example, the control system 118 can be configured to operate at much higher temperatures and be subject to much higher levels of noise than are present in the environment of the plurality of unentangled quantum processors 122.

In some embodiments, the control system 118 includes a classical computing system that executes software to compile instructions for the plurality of unentangled quantum processors 122. For example, the control system 118 may decompose a quantum logic circuit or quantum computing program into discrete control operations or sets of control operations that can be executed by the hardware in the plurality of unentangled quantum processors 122. In some examples, the control system 118 applies a quantum logic circuit by generating signals that cause the Qubit devices and other devices in the plurality of unentangled quantum processors 122 to execute operations. For instance, the operations may correspond to single-Qubit gates, two-Qubit gates, Qubit measurements, etc. The control system 118 can generate control signals that are communicated to the plurality of unentangled quantum processors 122 by the signal delivery system 120, and the devices in the plurality of unentangled quantum processors 122 can execute the operations in response to the control signals.

In some other embodiments, the control system 118 includes one or more classical computers or classical computing components that produce a control sequence, for instance, based on a quantum computer program to be executed. For example, a classical processor may convert a quantum computer program to an instruction set for the native gate set or architecture of the plurality of unentangled quantum processors 122. In some cases, the control system 118 includes a microwave signal source (e.g., an arbitrary waveform generator), a bias signal source (e.g., a direct current source) and other components that generate control signals to be delivered to the plurality of unentangled quantum processors 122. The control signals may be generated based on a control sequence provided, for instance, by a classical processor in the control system 118. The example control system 118 may include conversion hardware that digitizes response signals received from the plurality of unentangled quantum processors 122. The digitized response signals may be provided, for example, to a classical processor in the control system 118.

In some embodiments, the quantum computer system 104 includes multiple quantum information processors that operate as respective unentangled quantum processors 122. In some cases, each quantum processor can operate independently. For instance, the quantum computer system 104 may be configured to operate according to a distributed quantum computation model, or the quantum computer system 104 may utilize multiple quantum processors in another manner. In some implementations, the quantum computer system 104 includes multiple control systems, and each quantum processor may be controlled by a dedicated control system. In some implementations, a single control system can control multiple quantum processors. For instance, the control system 118 may include multiple domains that each control a respective quantum processor. In some instances, the quantum computing system 104 uses multiple quantum processors to execute multiple unentangled quantum computations (e.g., multiple Variational Quantum Eigen solver (VQE)) that collectively simulate a single quantum mechanical system.

In an embodiment, the quantum memory 124 is a quantum-mechanical version of classical computer memory 110. The classical computer memory 100 stores information such as binary states and the quantum memory 124 stores a quantum state for later retrieval. These states hold useful computational information known as Qubits. In an embodiment, the communication interface 106 which connects the classical computing system 102 and the quantum computing system 104 is a high speed digital interface.

FIG. 2 is an exemplary flow diagram illustrating a method 200 for implementing density functional theory on quantum processors through local density approximation for simulating chemical compounds, implemented by the system of FIG. 1, in accordance with some embodiments of the present disclosure. In an embodiment, the system 100 is configured to store instructions for execution of steps of the method 200 by the one or more hardware processors 108 and the plurality of unentangled quantum processors 122.

The steps of the method 200 of the present disclosure will now be explained with reference to the components or blocks of the system 100 as depicted in FIG. 1 and the steps of flow diagram as depicted FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Initially at step 202 of the method 200, one or more classical hardware processors are configured to receive a chemical compound whose one or more properties (alternatively referred as desired or target properties) to be extracted. The chemical compound may be a molecule or a solid. In the context of the present disclosure, the expression 'solid' refers to a periodic arrangement of atoms for example, the crystalline form of a molecule. For example, in the pharma industry, the chemical compound maybe a drug lead and its conformations whose physical properties must be analyzed to determine feasibility of synthesizing the drug from the drug lead. The one or more properties of the chemical compound includes one or more physical and one or more chemical properties [MJ1] [AM2] such as highest occupied molecular orbital and lowest unoccupied molecular (HOMO-LUMO) gap in solvent medium, acid-base dissociation constant of a drug, dipole moment, partial charges[AM2] , Gibbs free energy, polarization, magnetization, solubility, and electrochemical properties, or a combination thereof.

Further, at step 204 of the method 200, the one or more classical hardware processors are configured to obtain the plurality of atomic coordinates of each of a plurality of atoms comprised in the chemical compound. In an embodiment, tools such as Atomic Simulation Environment (ASE) are used to obtain the plurality of atomic coordinates of each of a plurality of atoms. For example, for drug paracetamol, a list of atomic coordinates (X, Y, Z) with a corresponding atomic symbol is obtained as: like (2.8660 -2.5950 0.0000 O), (4.5981 1.4050 0.0000 O), (2.8660 1.4050 0.0000 N), (2.8660 0.4050 0.0000 C), (1.4631 0.2150 0.0000 H), and/or the like.

Further, at step 206 of the method 200, the one or more classical hardware processors are configured to determine a plurality of electron integrals, a core Hamiltonian, and a collocation matrix from the plurality of atomic coordinates of each of the plurality of atoms comprised in the chemical compound received at step 202 of the method 200. The plurality of electron integrals includes (i) 4 center 2 electron integrals, (ii) 3 center 2 electron integrals, (iii) 2 center 2 electron integrals and (iv) 2 center 1 electron integrals. The electron integrals (i), (ii), (iii) describe the Coulomb repulsion integral that are computed in atomic orbital basis and can be represented in either spherical or cartesian coordinates. The electron integral (iv) describes the overlap between the basis states. In an embodiment, the plurality of electron integrals is determined using tools such as LIBCINT, Python-based Simulations of Chemistry Framework (PySCF), NorthWest computational Chemistry (NWchem), etc.

The core Hamiltonian matrix which is a $N_b \times N_b$ matrix is determined using the Kohn-Sham (KS) hybrid Density

$$\mathbb{B} = \{\phi_\mu(r)\}_{\mu=1}^{N_b}$$

Functional Theory (DFT) process which is initiated from a set of $N_b$ basis functions to compute the core Hamiltonian matrix $h$. $h$ constitutes free particle energy of electrons and one-body nuclear potential arising from electron-nucleus interactions, both these terms are independent of electronic density. Therefore $h$ needs to be computed while initiating a self-consistent field (SCF) procedure.

The collocation matrix is a rectangular matrix of dimensions ($Ng$, $Nao$), wherein $N_g$ represents a number of real space grid points, and $Nao$ is a number of basis functions. The collocation matrix includes a plurality of basis functions of a plurality of atomic orbitals and a plurality of points on numerical grid. Each of the plurality of basis functions is a Gaussian wave function centered around the plurality of atomic coordinates. Thus, the plurality of basis functions is represented as Gaussians functions as a function of the plurality of atomic coordinates of the plurality of atoms and an angular and spin momentum. The collocation matrix is mathematically represented using equation (1) below:

$$\Phi = \begin{pmatrix} \phi_1(x_1, y_1, z_1), \dots\dots\dots \phi_1\left(x_{N_g}, y_{N_g}, z_{N_g}\right) \\ \vdots \\ \phi_{Nao}(x_1, y_1, z_1), \dots\dots\dots \phi_{Nao}\left(x_{N_g}, y_{N_g}, z_{N_g}\right) \end{pmatrix} \quad (1)$$

Further, at step 208 of the method 200, the plurality of unentangled quantum processors is configured to determine an initial density matrix of the chemical compound by diagonalizing the core Hamiltonian. The initial density matrix (or otherwise the density matrix in general defines the density of particles such as electrons of the chemical compound. In an embodiment, the initial density matrix is constructed using (i) a single particles unitary rotation matrix which is obtained by diagonalizing the core Hamiltonian matrix, and (ii) electron occupancies, which may be done using the approach in IN 20232106141 titled 'Method And System For Reducing Time Complexity Of Density Functional Theory Calculations With Qubitized Diagonalization'.

Once the density matrix is determined, at step 210 of the method 200, the plurality of unentangled quantum processors is configured to iteratively update the initial density matrix until a convergence criteria is satisfied to obtain a final density matrix of the chemical compound. The convergence criteria is said to be satisfied when norm of a difference between the intermediate density matrix at a current iteration and the initial density matrix at a previous iteration is lesser than a predefined threshold. In an embodiment, an exemplary predefined threshold is $10^{-9}$.

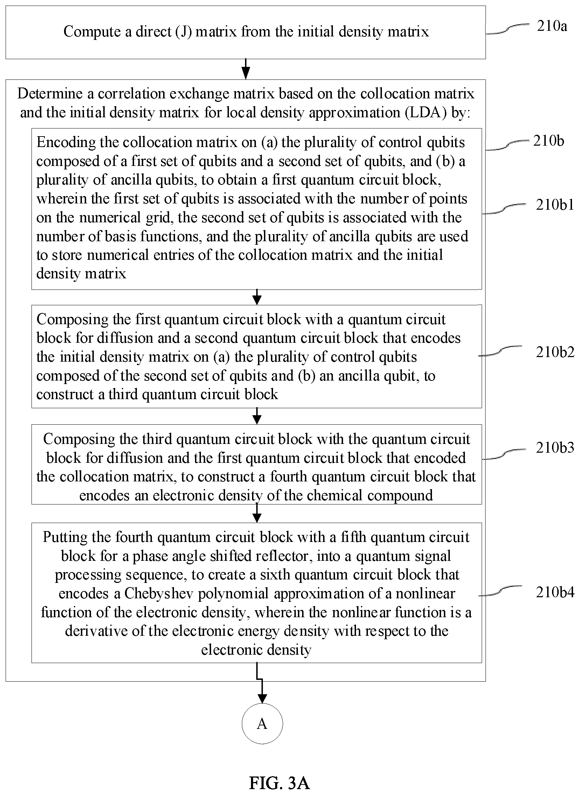

FIGS. 3A-3B are flowcharts showing the steps for iteratively updating the initial density matrix at each iteration, in accordance with some embodiments of the present disclosure. As shown in FIGS. 3A-3B, iteratively updating the initial density matrix at each iteration is explained through steps 210a through 210e.

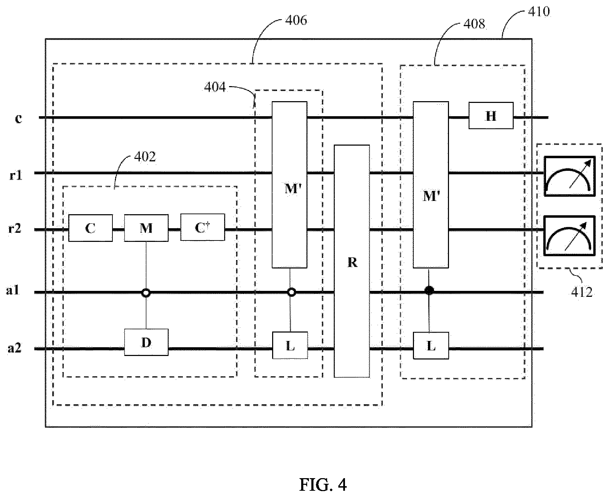

At step 210a, a direct matrix (alternatively referred to as J matrix, Coulomb matrix etc.) is computed from the initial density matrix determined at step 208 of the method 200, using a direct matrix quantum circuit block. FIG. 4 is an exemplary direct matrix quantum circuit block, in accordance with some embodiments of the present disclosure. The direct matrix quantum circuit includes (i) a third set of qubits and a fourth set of qubits, and (b) the plurality of ancilla qubits. The third set of qubits is associated with number of auxiliary basis functions in density fitting approximation of the plurality electron integrals, and the fourth set of qubits is associated with number of basis functions. In FIG. 4, 'c' represents the third set of qubits, 'r1, r2' represents the fourth set of qubits and 'a1, a2' represent the plurality of ancilla qubits. Here, M represents a sequence of multi-controlled unitary gates needed to encode the occupancies (1's for occupied electronic states and 0's otherwise).

In an embodiment, the step 210a is better understood by way of following description as exemplary explanation. In the Kohn-Sham (KS) hybrid Density Functional Theory (DFT) process, the direct ($J$) matrix and an exact-exchange ($K$) matrix are electronic density dependent terms which are computed from an Electronic Repulsion Integral (ERI) tensor. Further, in the Kohn-Sham (KS) hybrid Density Functional Theory (DFT) process, a correlation exchange potential, or a correlation exchange matrix ($V^{xc}$) is computed from an electronic density, its gradient and/or a Kinetic energy density. Together $J$, $K$ and $V^{xc}$ make a hybrid Kohn-Sham Fock matrix functional F as given by equation (2):

$$F[D] = h + J[D] - cK[D] + V^{xc}[D] \tag{2}$$

In equation (2), $D$ is a one-particle density matrix discretized in a basis of $\{\phi_\mu\}$ and $c \in \mathbb{R}^+$ is a modulation for the exact-exchange term. The terms $J, K$ can be computed from an atomic orbital (AO)-integral approach using the ERI tensor represented as $\langle ij|kl\rangle$ and $D$ as shown below in equations (3) and (4), respectively.

$$J_{ij} = \sum_{kl}\langle ij|kl\rangle D_{kl} \tag{3}$$

$$K_{ij} = \sum_{kl}\langle ik|jl\rangle D_{kl} \tag{4}$$

In equations (3) and (4), the ERI tensor $\langle ij|kl\rangle$ is obtained by integrating space of basis functions in $\mathbb{R}^3$ according to equation (5) shown below:

$$\langle ij|kl\rangle = \int d^3r d^3r' \phi_i(r)\phi_j(r)\frac{1}{|r-r'|}\phi_k(r')\phi_l(r'). \tag{5}$$

The correlation-exchange potential $V^{xc}$ in the discretized basis $\{\phi_i\}$ is computed from equation (6) shown below, where the basis functions are defined according to equation (7).

$$V_{ij}^{xc} = \int_{R^3} d^3r \phi_i(r)\frac{\delta E^{xc}[\rho(r)]}{\delta\rho(r)}\phi_j(r). \tag{6}$$

$$\phi_a(r) = (x - A_x)^{a_x}(y - A_y)^{a_y}z - A_z)^{a_z} \exp(-\vartheta(x - A_x)^2)\exp(-\vartheta(y - A_y)^2)\exp(-\vartheta(z - A_z)^2) \tag{7}$$

In equation 6, $A_x, A_y, A_z$ are nuclear coordinate locations of the Gaussian functions, $a = (a_x, a_y, a_z)$ are the integer cartesian quanta and $\vartheta$ is the cartesian Gaussian exponent. In equation (6), $E^{xc}$ is an exchange energy functional evaluated for the electronic density $r$ and its form depends on a DFT method implemented using a plurality of classes of Density Functional Theory (DFT) protocols. The plurality of classes of DFT protocols include but are not limited to local density approximation (LDA), generalized gradient approximation (GGA), meta GGA, hybrid DFT and double hybrid DFT. In the context of the present disclosure, the DFT protocol used is meta Generalized Gradient Approximation (meta GGA). The ERI tensor is further represented using a Cholesky decomposition representation as given by equation (8) below.

$$\langle ij|kl \rangle = \sum_P L_{ij}^P L_{kl}^P \qquad (8)$$

$L^P$ represents Cholesky matrices that can be obtained from a Density-Fitting (DF) or a resolution of identity (RI) method as in equation (9):

$$L_{ij}^P = \frac{1}{\sqrt{w_P}} \sum_Q u_{QP} \langle ij|Q \rangle \qquad (9)$$

In equation (9), $\langle ij|Q \rangle$ are 3-center 2-electron integrals represented in terms of the auxiliary basis functions $\{\chi_P(r)\}_{P=1}^{Naux}$, , and $u_{QP}$, $w_P$ are obtained from the spectral decomposition of 2-center 2-electron integrals $V_{PQ} = \sum_R u_{PR} w_R u_{QR}^*$ represented in the auxiliary basis functions. The 3-center 2-electron integrals are given by equation (10) and the two center $V_{PQ} = \langle P|Q \rangle$ represents two center two electron integrals which are given by equation (11).

$$\langle ij|P \rangle = \int d^3r d^3r' \frac{\phi_i(r)\phi_j(r)\Lambda_P(r')}{|r-r'|} \qquad (10)$$

$$\langle P|Q \rangle = \int d^3r \frac{\Lambda_P(r)\Lambda_Q(r)}{|r-r'|} \qquad (11)$$

The $J$ and $K$ matrix elements are computed using the RI approach as in equation (12).

$$J_{ij} = \sum_P L_{ij}^P \sum_{kl} L_{kl}^P D_{kl}, K_{ij} = \sum_{Pl} L_{il}^P \sum_k L_{jk}^P D_{kl} \qquad (12)$$

When the KS-DFT is classically computed, the complexity of computing $J$ and $K$ is $O(pN^2)$ and this complexity resides in computing $K$. Computing $h$ and $V^{xc}$ has lower complexity of $O(N^2)$.

For executing any of the plurality of classes of Density Functional Theory (DFT) protocols, next step is to solve generalized eigenvalue problem for the Fock matrix accounting for an overlap between basis functions $S_{ij} = \langle \phi_i|\phi_j \rangle$ and an intermediate density matrix $D^{(l)}$ of a current iteration as given by equation (13).

$$F\left[D^{(l)}\right]C^{(l+1)} = SC^{(l+1)}\hat{E}^{(l+1)} \qquad (13)$$

In equation (13), the one particle density matrix or intermediate density matrix $D^{(l)} = C^{(l)}WC^{(l)\dagger}$, where an occupancy matrix $W_{ij} = \theta(\mu - E_i)\delta_{ij}$ fills up $N_e/2$ lowest energy levels below a chemical potential $\mu$. Here, $N_e$ is a number of electrons.

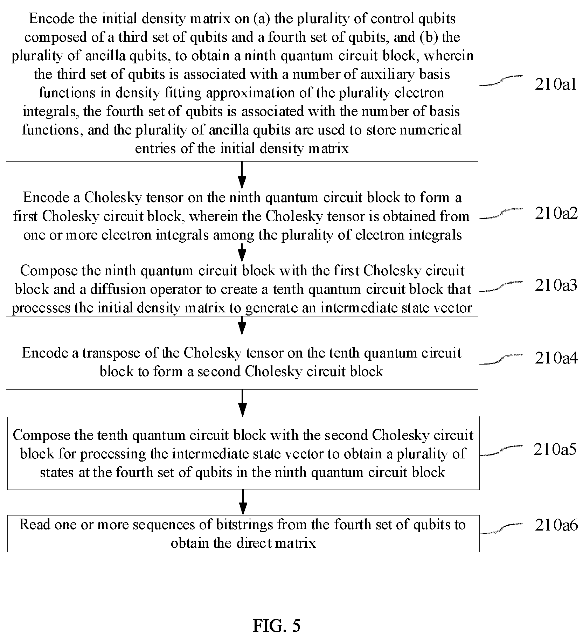

FIG. 5 is a flowchart showing the steps for computing the J matrix from the initial density matrix, in accordance with some embodiments of the present disclosure. As shown in FIG. 5, computing the J matrix from the initial density matrix is explained through steps 210a1 to 210a6. Initially, at step 210a1, the initial density matrix is encoded (alternatively referred as loaded or block encoded) on (a) the plurality of control qubits composed of the third set of qubits and the fourth set of qubits, and (b) the plurality of ancilla qubits, to obtain a ninth quantum circuit block (represented by block 402 in FIG. 4).

In an embodiment, (a) the plurality of control qubits composed of the third set of qubits and the fourth set of qubits, and (b) the plurality of ancilla qubits, to obtain the ninth quantum circuit block, are mathematically represented as:

$$\log N_{aux} + 2 \log N_{ao} + n \; qubits$$

wherein $\log N_{aux}$ represents the third set of qubits, $2 \log N_{ao}$ represents the second set of qubits, and $n$ *qubits* represents the plurality of ancilla qubits.

As shown in block 402, the control is loaded on r2 and data elements of the initial density matrix are loaded on the ancilla qubit a2. The initial density matrix is loaded using its Eigen decomposition representation that involves: i) $^{Nao}C_2$ Givens rotations on $\log N_{ao}$ qubits, ii) Then block encoding a diagonal matrix of 1's in the initial $N_e/2$ diagonal bocks and zeros in the rest using $2\log N_{ao}$ qubits, iii) Another set of $^{Nao}C_2$ Givens rotation with conjugate angles on $N_e/2$ diagonals. This is mathematically represented by equation 14.

$$O(D) = I_2^{\otimes m} \otimes \left[ \left( C \otimes I_2^{\otimes n} \otimes I_2^{a_1} \right) \left( \sum_k |k, k\rangle\langle k, k| \otimes \left( \theta(\mu - E_k) I_{a1} + (1 - \theta(\mu - E_k)) Y_{a1} \right) \left( C^\dagger \otimes I_2^{\otimes n} \otimes I_2^{a_1} \right) \right] \otimes I_{a2} \tag{14}$$

The readouts from the encoding of the initial density matrix are obtained by equation 15.

$$\langle P, i, 0,0,0 | O(D) | P, j, 0,0,0 \rangle = \sum_{k=1}^{N_e/2} C_{ik} C_{kj}^* = D_{ij}, \text{ where } N_e = 2 \sum_{k=1}^{N} \theta(\mu - E_k) \tag{15}$$

Once the initial density matrix is encoded, at step 210a2, a Cholesky tensor is encoded on the ninth quantum circuit to form a first Cholesky circuit block (represented by block 404 in FIG. 4). In an embodiment, the Cholesky tensor is obtained from one or more electron integrals among the plurality of electron integrals, particularly, 3-center 2-electron and 2-center 2-electron integrals. As shown in the block 404, the controls are encoded on the $log\ N_{aux} + 2\ log\ N_{ao}$ qubits and the data is loaded on the ancilla qubits. Step 210a2 is mathematically represented by equation 16.

$$V_L = \sum_{c=0, r_1=0, r_2=0}^{N_{aux}-1, N_{ao}-1} \left[ |c, r_1, r_2, 0\rangle\langle c, r_1, r_{2,}0| \otimes I_2 + |c, r_1, r_2, 1\rangle\langle c, r, 1| \otimes \left( L_{r_1, r_2}^{c'} I + i \sqrt{1 - \left( L_{r_1, r_2}^{c'} \right)^2} Y \right) \right] \tag{16}$$

Further at step 210a3, the ninth quantum circuit block is composed with the first Cholesky circuit block and a diffusion operator to create a tenth quantum circuit block that processes the initial density matrix to generate an intermediate state vector as illustrated by block 406. The diffusion operator $R$ is given by equation 17.

$$R = \sum_{kl} \left[ 2 \frac{|k, +, 0\rangle\langle l, +, 0|}{N_{aux}} \otimes I_2^{\otimes 2n} - I \right] \tag{17}$$

Next, at step 210a4, transpose of the Cholesky tensor is encoded on the tenth quantum circuit block to form a second Cholesky circuit block as illustrated by block 408. It is mathematically represented by equation 17.

$$V'_L = \sum_{c=0, r_1=0, r_2=0}^{N_{aux}-1, N_{ao}-1} \left[ |c, r_1, r_2, 0\rangle\langle c, r_1, r_{2,}0| \otimes \left( L_{r_1, r_2}^{c'} I + i \sqrt{1 - \left( L_{r_1, r_2}^{c'} \right)^2} Y \right) + |c, r_1, r_2, 1\rangle\langle c, r, 1| \otimes I_2 \right] \tag{18}$$

Further, at step 210a5, the tenth quantum circuit block is composed with the second Cholesky circuit block (to form block 410) for processing the intermediate state vector to obtain a plurality of states at the fourth set of qubits in the ninth quantum circuit block. At step 210a6, the one or more sequences of bitstrings are read from the fourth set of qubits (by block 412) to obtain the direct matrix. This step is mathematically represented by equation 19.

$$\langle 0, i, 0,0,0 | H^{\otimes m} V'_L R V_L O(D) | 0, j, 0,1,0 \rangle = \sum L_{ij}^a L_{kl}^a D_{kl} = J_{ij} \tag{19}$$

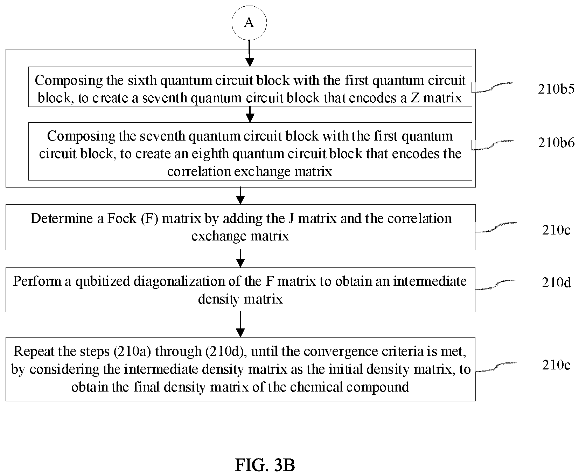

At step 210a7, amplitude amplification is performed on the one or more sequences of bitstrings if there is overlap between the plurality of states obtained at step 210a5, to compute the direct matrix.
Once the direct matrix is obtained, at step 210b, a correlation exchange matrix is determined based on the direct matrix and the collocation matrix using the local density approximation (LDA). As shown in FIG. 3, determining the correlation exchange matrix based on the collocation matrix and the initial density matrix for local density approximation (LDA) is explained through steps 210b1 to 210b6.
At step 210b1, the collocation matrix is encoded on (a) the plurality of control qubits composed of a first set of qubits and a second set of qubits, and (b) a plurality of ancilla qubits, to obtain a first quantum circuit block. The first set of qubits is associated with the number of points on the numerical grid, the second set of qubits is associated with the number of basis functions, and the plurality of ancilla qubits are used to store numerical entries of the collocation matrix and the initial density matrix. This is mathematically represented as equation 20:

$$[068] \quad V_\Phi = \sum_{c=0,r=0}^{N_{ao}-1, N_g-1} \left[ |c,r,0\rangle\langle c,r,0| \otimes I_2 + |c,r,1\rangle\langle c,r,1| \otimes \left( \Phi_{cr} I + i\sqrt{1 - \Phi_{cr}^2 Y} \right) \right] \tag{20}$$

In an embodiment, (i) the plurality of qubits composed of the first set of qubits and the second set of qubits, and (ii) the plurality of ancilla qubits, to obtain the first quantum circuit block, are mathematically represented as:

$$\log N_g + \log N_{ao} + n \; qubits$$

wherein log $N_g$ represents the first set of qubits, log $N_{ao}$ represents the second set of qubits, and $n$ *qubits* represents the plurality of ancilla qubits.

At step 210b2, the first quantum circuit block obtained at step 210b1 is composed with a quantum circuit block for diffusion and a second quantum circuit block that encodes the initial density matrix on (a) the plurality of control qubits composed of the second set of qubits and (b) the ancilla qubit, to construct a third quantum circuit block. This is mathematically represented as equation 21:

$$V_D = \left( C \otimes I_2^{\otimes N_g} \otimes I_2 \otimes I_2 \right) \left( \sum_{k,j} |k,j,0\rangle\langle k,j,0| \otimes (\theta(\mu - E_k) I_{a2} + i(1 - \theta(\mu - E_k)) Y_{a2} + |k,j,1\rangle\langle k,j,1| \otimes I_2 \right) (C^\dagger \otimes I_2^{\otimes ng} \otimes I_2 \otimes I_2) \tag{21}$$

At step 210b3, the third quantum circuit block obtained at step 210b2 is composed with the quantum circuit block for diffusion and the first quantum circuit block that encoded the collocation matrix, to construct a fourth quantum circuit block that encodes an electronic density of the chemical compound. This is mathematically represented as equation 22:

$$R_1 = \sum_{cc'r} 2 \frac{|c,r,+,0\rangle\langle c',r,+,0|}{N_g} - I \tag{22}$$

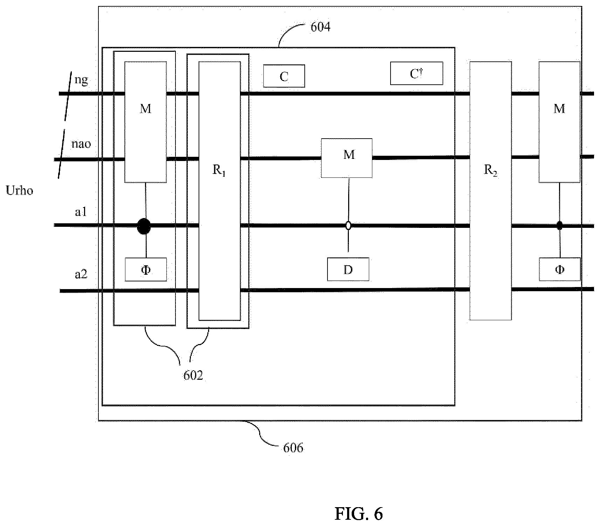

FIG. 6 is an exemplary fourth quantum circuit block (block 606) that encodes an electronic density of the chemical compound, in accordance with some embodiments of the present disclosure. In FIG. 6, $N_g$ is the first set of qubits associated with the number of points on the numerical grid, $N_{ao}$ is the second set of qubits associated with the number of basis functions, $a_1$, $a_2$ are ancilla qubits, C is the unitary rotation matrix obtained from diagonalizing the Fock matrix, M symbolizes the sequence of controlled unitaries acting on the $R_2$ that encodes the entries of the D matrix on the qubit $a_2$, D is the occupancy matrix whose first $a_1/2$ entries are one and the rest is zero. $C^\dagger$ is the hermitian conjugate of C, and $\Phi$ symbolizes the collocation matrix. Further in FIG. 6, the first quantum circuit block is represented in block 602 and the second quantum circuit is represented in block 604.

At step 210b4, the fourth quantum circuit block constructed at step 210b3 is put with a fifth quantum circuit block for a phase angle shifted reflector, into a quantum signal processing sequence, to create a sixth quantum circuit block that encodes a Chebyshev polynomial approximation of a nonlinear function of the electronic density. The nonlinear function is a derivative of the electronic energy density with respect to the electronic density. This is mathematically represented as equation 23:

$$\frac{dE_{xc}}{d\rho(r_i)} = \left\langle 0,i,0,0 \right| \prod_{k=1}^{N} \left[ V_\Phi R_1 V_D R_1 V_\Phi \left( (1 + e^{-i\phi_k}) |0,i,0,0\rangle\langle 0,i,0,0| - 1 \right) \right] |0,i,0,0\rangle \tag{23}$$

At step 210b5, the sixth quantum circuit block created at step 210b4 is composed with the first quantum circuit block obtained at step 210b1, to create a seventh quantum circuit block that encodes a Z matrix.

At step 210b6, the seventh quantum circuit block that created at step 210b5 is composed with the first quantum circuit block obtained at step 210b1, to create an eighth quantum circuit block that encodes the correlation exchange matrix. This is mathematically represented as equation 23:

$$V_{ij}^{xc} = \langle i, 0,0,0 | U_{V_{xc}} | j, 0,0,0 \rangle$$

$$= \langle i, 0,0,0 | H^{\otimes N_g} V_\Phi \prod_{k=1}^{N} [(H^{\otimes N_{ao}} \otimes I^{\otimes(N_g+2)}) V_\Phi R_1 V_D R_1 V_\Phi ((1$$

$$+ e^{-i\phi_k}) | 0, i, 0,0 \rangle \langle 0, i, 0,0 | - 1)] \quad (23)$$

$$(H^{\otimes N_{ao}} \otimes I^{\otimes(N_g+2)}) V_\Phi H^{\otimes N_g} | j, 0,0,0 \rangle = \sum_r \phi_{ir} \frac{dE}{d\rho(r)} = \Phi_{jr} \quad (24)$$

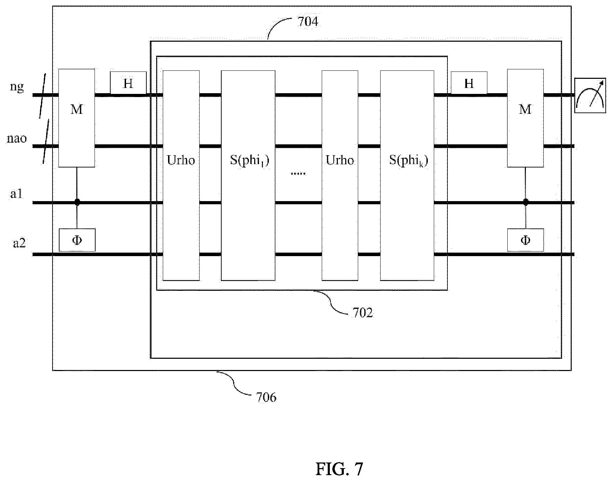

FIG. 7 is an exemplary eighth quantum circuit block (block 706) that encodes the correlation exchange matrix, in accordance with some embodiments of the present disclosure. In FIG. 7, Urho is the quantum circuit block that encodes the electronic density. $S(phi_1)$ to $S(phi_k)$ represents the phased reflectors, where the phase angles are precalculated for a given nonlinear function. Further in FIG. 7, the sixth quantum circuit block is represented in block 702 and the seventh quantum circuit block that encodes the Z matrix is represented in block 704.

Once the correlation exchange matrix is determined, at step 210c, a Fock matrix is computed by adding the direct matrix computed at step 210a and the correlation exchange matrix. At step 21 0d, qubitized diagonalization of the Fock matrix determined at step 210c is performed to obtain an intermediate density matrix.

The intermediate density matrix is used in a subsequent iteration. At step 210e, the steps (210a) through (210d), are repeated until the convergence criteria is met, by considering the intermediate density matrix as the initial density matrix, to obtain the final density matrix of the chemical compound.

Finally, at step 212, the one or more classical hardware processors are configured to utilize the final density matrix of the chemical compound to extract the one or more desired properties of the chemical compound. The final density matrix enables computation of the one or more desired properties such as the HOMO-LUMO gap from the energies of the highest occupied Kohn Sham orbital and lowest unoccupied orbital, the charge distribution from integrating the electronic density in regions around the different atoms. Here, the electronic density in turn is obtained from the density matrix, dipole moment from the expectation value of the perturbation electric field operator with respect to the density matrix.

USE CASE EXAMPLES

Example 1: For drug screening, an accurate potential energy surface of a drug molecule is obtained from the method 200 disclosed herein. Then, gradients are studied from the PES and the forces associated with the displacement of the ligand molecules in protein environment are calculated. This will enable more accurate assessment of ligand conformations and protein docking faces. Further dynamical response functions can be calculated which helps better determination of the binding..

Example 2: For selecting cathode materials for rechargeable batteries, accurate optimized geometry of the cathode molecules in electrolyte environment, and associated ground state energy are calculated from the method 200. This will then be used to compute more accurate energy enthalpy differences for the redox reactions. In turn the energy enthalpy differences are used to calculate high open cell voltages (OCV) (equilibrium voltage). A higher OCV leads to a higher cut-off for the recharging voltage. Cathode materials with different co-doped transition metal oxides (like Co, Ni, Mn) are screened using high OCV as the deciding factor.

Example 3: In order to attain carbon neutrality in the near future, novel capture technologies have to be discovered. Carbon dioxide adsorption on amine polymers is one such technology. To assess the amount of carbon dioxide that can be adsorbed the BET surface area is computed from classical Molecular dynamics, but it requires calculating the potential energy surface (PES) from electronic calculations. Calculating an accurate PES with post-DFT corrections is computationally expensive which can be overcome by the method 200 disclosed herein.

Example 4: For drug conformational search and drug design, the molecular descriptors, conformations, solvation energy are obtained from the method 200 disclosed herein. Then from the conformational energies and the descriptors the subset of drug molecule structure and conformations with the one or more desired (target) properties are prepared via high throughput experimentation.

EXPERIMENTAL RESULTS

The J matrix computation of the methods and systems of the present disclosure was performed on classical processors using conventional methods and quantum processor, using method 200. The classical and quantum resources (such as processors and memory) are required to compute the J matrix using the AO-integral approach, the Density fitting approach and the semi-numerical exchange approach. For all these three types of methods to compute J matrix the Quantum circuits of same type as given in the specification is applicable. For the AO-integral approach, the number of qubits needed to encode the electronic integrals is $4 \log N_b + 2$, where $N_b = N_{ao}$ is the number of basis functions. On the other hand, for the classical approach the space complexity is $O(N_b^4)$ to store $N_b^4$ numbers. log is clearly a sublinear memory scaling on the other hand the polynomial scaling involved is steep in classical approach. The gate complexity needed for computing the J matrix stems from two sources, one is the diffusion quantum circuit block and the multiqubit gates needed to encode the integrals and the density matrix. The first component from the diffusion quantum circuit block leads to the gate complexity $8 \log N_b$. The results are recorded in table 1.

| Quantity | Classical Complexity | | Quantum Complexity | |
|---|---|---|---|---|
| | Space | Time | No. of Qubits | Gate complexity |
| J(AO) | $O(N_b^4)$ | $O(N_b^4)$ | $4 \log N_b + 2$ | $8 \log N_b$ |
| J(DF) | $O(N_b^2 N_{aux})$ | $O(N_b^2 N_{aux})$ | $2 \log N_b + \log N_{aux}$ | $4 \log N_b + 2 \log N_{aux}$ |
| J(sN) | $O(N_b^2 N_g)$ | $O(N_b^2 N_g)$ | $2 \log N_b + \log N_g$ | $4 \log N_b + 2 \log N_g$ |

Table 1

The correlation exchange matrix computation of the methods and systems of the present disclosure was performed on classical processor using conventional methods and quantum processors using the method 200. The correlation exchange matrix is a function of electronic density. For computing the electronic density, the number of qubits needed to encode the electronic density is given by $\log N + \log N_g$, where $N_g$ is the number of points on numerical grid and $N$ is number of basis functions. The gate complexity is associated with the diffusion operator that enables the multiplication between the collocation matrix the density matrix and transpose of collocation matrix and it scales logarithmically with the number of basis functions. Classically to store the integrals is $N^2 N_g$, and the time complexity is $N^2 N_g$. The results are recorded in table 2:

| Quantity | Classical Complexity | | Quantum Complexity | |
|---|---|---|---|---|
| | Space | Time | No. of Qubits | Gate complexity |
| $V_{xc}[\rho]$ LDA | $O(N^2 N_g)$ | $O(N^2 N_g)$ | $\log N + \log N_g$ | $4(\log N + \log N_g)$ |

Table 2

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The present disclosure solves the unresolved problem of implementing density functional theory on quantum processors through local density approximation for simulating the chemical compounds, to solve the above-mentioned bottlenecks in the conventional techniques for the DFT simulations. The experimental results show that the present disclosure outperforms the conventional techniques in terms of the number of calculations required and the time complexity.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, non-volatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A method (200), performed by a system comprising one or more classical hardware processors and a plurality of unentangled quantum processors, wherein the one or more classical hardware processors are communicably coupled to the plurality of unentangled quantum processors by respective interfaces, wherein the method comprising:

   receiving, via the one or more classical hardware processors, a chemical compound whose one or more properties to be extracted, wherein the chemical compound is one of (i) a molecule, and (ii) a solid (202);
   obtaining, via the one or more classical hardware processors, a plurality of atomic coordinates of each of a plurality of atoms present in the chemical compound (204);
   determining, via the one or more classical hardware processors, (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension $N_g$ and $N_{ao}$, and wherein $N_g$ represents a number of points on a numerical grid, and $N_{ao}$ represents a number of basis functions (206);
   determining, via the plurality of unentangled quantum processors, an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies (208);
   iteratively updating, via plurality of unentangled quantum processors, the initial density matrix until a convergence criteria is met, to obtain an final density matrix of the chemical compound (210), wherein iteratively updating the initial density matrix at each iteration comprises:

(a) computing a direct (J) matrix from the initial density matrix (210a);
(b) determining a correlation exchange matrix based on the collocation matrix and the initial density matrix for local density approximation (LDA) (210b) by:

(i) encoding the collocation matrix on (a) a plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix (210b1);
(ii) composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block (210b2);
(iii) composing the third quantum circuit block with the quantum circuit block for diffusion and the first quantum circuit block that encoded the collocation matrix, to construct a fourth quantum circuit block that encodes an electronic density of the chemical compound (210b3);
(iv) putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density (210b4);
(v) composing the sixth quantum circuit block with the first quantum circuit block, to create a seventh quantum circuit block that encodes a Z matrix (210b5); and
(vi) composing the seventh quantum circuit block with the first quantum circuit block, to create an eighth quantum circuit block that encodes the correlation exchange matrix (210b6);

(c) determining a Fock (F) matrix by adding the J matrix and the correlation exchange matrix (210c);
(d) performing a qubitized diagonalization of the F matrix to obtain an intermediate density matrix (210d); and
(e) repeating the steps (a) through (d), until the convergence criteria is met, by considering the intermediate density matrix as the initial density matrix, to obtain the final density matrix of the chemical compound (210e); and

utilizing, via the one or more classical hardware processors, the final density matrix of the chemical compound, to extract the one or more properties of the chemical compound(212).

2. The method (200) as claimed in claim 1, wherein computing the J matrix from the initial density matrix comprises:

encoding the initial density matrix on (a) the plurality of control qubits composed of a third set of qubits and a fourth set of qubits, and (b) the plurality of ancilla qubits, to obtain a ninth quantum circuit block, wherein the third set of qubits is associated with a number of auxiliary basis functions in density fitting approximation of the plurality electron integrals, the fourth set of qubits is associated with the number of basis functions, and the plurality of ancilla qubits are used to store numerical entries of the initial density matrix (210a1);
encoding a Cholesky tensor on the ninth quantum circuit block to form a first Cholesky circuit block, wherein the Cholesky tensor is obtained from one or more electron integrals among the plurality of electron integrals (210a2);
composing the ninth quantum circuit block with the first Cholesky circuit block and a diffusion operator to create a tenth quantum circuit block that processes the initial density matrix to generate an intermediate state vector (210a3);
encoding a transpose of the Cholesky tensor on the tenth quantum circuit block to form a second Cholesky circuit block (210a4);
composing the tenth quantum circuit block with the second Cholesky circuit block for processing the intermediate state vector to obtain a plurality of states at the fourth set of qubits in the ninth quantum circuit block (210a5); and
reading one or more sequences of bitstrings from the fourth set of qubits to obtain the direct matrix (210a6).

3. The method (200) as claimed in claim 1, wherein the convergence criteria is met when norm of a difference between the intermediate density matrix at a current iteration and the initial density matrix at a previous iteration is lesser than a predefined threshold.

4. The method (200) as claimed in claim 1, wherein (i) the plurality of control qubits composed of the first set of qubits and the second set of qubits, and (ii) the plurality of ancilla qubits, to obtain the first quantum circuit block, are mathematically represented as:

$$\log N_g + \log N_{ao} + n \; qubits$$

wherein log $N_g$ represents the first set of qubits, log $N_{ao}$ represents the second set of qubits, and *n qubits* represents the plurality of ancilla qubits.

5. The method (200) as claimed in claim 2, wherein (a) the plurality of control qubits composed of the third set of qubits and the fourth set of qubits, and (b) the plurality of ancilla qubits, to obtain the ninth quantum circuit block, are mathematically represented as:

$$\log N_{aux} + 2 \log N_{ao} + n \; qubits$$

wherein log $N_{aux}$ represents the third set of qubits, 2 log $N_{ao}$ represents the second set of qubits, and *n qubits* represents the plurality of ancilla qubits.

6. The method (200) as claimed in claim 2, wherein computing the J matrix from the initial density matrix further comprises performing amplitude amplification on the one or more sequences of bitstrings if there is overlap between the plurality of states (210a7).

7. A system (100), comprising:
one or more classical hardware processors (108) and a plurality of unentangled quantum processors (122), wherein the one or more classical hardware processors (108) are communicably coupled to the plurality of unentangled quantum processors (122) by respective interfaces, wherein the one or more classical hardware processors are communicably coupled to at least one memory (110) storing programmed instructions; one or more Input /Output (I/O) interfaces (116); and at least one quantum memory (124) operatively coupled to the plurality of unentangled quantum processors (122), wherein the one or more classical hardware processors (108) and the plurality of unentangled quantum processors (122) are configured by the programmed instructions to:

receive a chemical compound whose one or more properties to be extracted, wherein the chemical compound is one of (i) a molecule, and (ii) a solid;
obtain a plurality of atomic coordinates of each of a plurality of atoms present in the chemical compound;
determine (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension Ng and Nao, and wherein Ng represents a number of points on a numerical grid, and Nao represents a number of basis functions;
determine an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies;
iteratively update the initial density matrix until a convergence criteria is met, to obtain an final density matrix of the chemical compound, wherein iteratively updating the initial density matrix at each iteration comprises:

(a) computing a direct (J) matrix from the initial density matrix;
(b) determining a correlation exchange matrix based on the collocation matrix and the initial density matrix for local density approximation (LDA) by:

(i) encoding the collocation matrix on (a) a plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix;
(ii) composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block;

(iii) composing the third quantum circuit block with the quantum circuit block for diffusion and the first quantum circuit block that encoded the collocation matrix, to construct a fourth quantum circuit block that encodes an electronic density of the chemical compound;

(iv) putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density;

(v) composing the sixth quantum circuit block with the first quantum circuit block, to create a seventh quantum circuit block that encodes a Z matrix; and

(vi) composing the seventh quantum circuit block with the first quantum circuit block, to create an eighth quantum circuit block that encodes the correlation exchange matrix;

(c) determining a Fock (F) matrix by adding the J matrix and the correlation exchange matrix ;

(d) performing a qubitized diagonalization of the F matrix to obtain an intermediate density matrix; and

(e) repeating the steps (a) through (d), until the convergence criteria is met, by considering the intermediate density matrix as the initial density matrix, to obtain the final density matrix of the chemical compound; and

utilize the final density matrix of the chemical compound, to extract the one or more properties of the chemical compound.

8. The system (100) as claimed in claim 7, wherein the plurality of unentangled quantum processors (122) are configured by the programmed instructions to compute the J matrix from the initial density matrix by:

encoding the initial density matrix on (a) the plurality of control qubits composed of a third set of qubits and a fourth set of qubits, and (b) the plurality of ancilla qubits, to obtain a ninth quantum circuit block, wherein the third set of qubits is associated with a number of auxiliary basis functions in density fitting approximation of the plurality electron integrals, the fourth set of qubits is associated with the number of basis functions, and the plurality of ancilla qubits are used to store numerical entries of the initial density matrix; encoding a Cholesky tensor on the ninth quantum circuit block to form a first Cholesky circuit block, wherein the Cholesky tensor is obtained from one or more electron integrals among the plurality of electron integrals;

composing the ninth quantum circuit block with the first Cholesky circuit block and a diffusion operator to create a tenth quantum circuit block that processes the initial density matrix to generate an intermediate state vector;

encoding a transpose of the Cholesky tensor on the tenth quantum circuit block to form a second Cholesky circuit block;

composing the tenth quantum circuit block with the second Cholesky circuit block for processing the intermediate state vector to obtain a plurality of states at the fourth set of qubits in the ninth quantum circuit block; and

reading one or more sequences of bitstrings from the fourth set of qubits to obtain the direct matrix.

9. The system (100) as claimed in claim 7, wherein the convergence criteria is met when norm of a difference between the intermediate density matrix at a current iteration and the initial density matrix at a previous iteration is lesser than a predefined threshold.

10. The system (100) as claimed in claim 7, wherein (i) the plurality of control qubits composed of the first set of qubits and the second set of qubits, and (ii) the plurality of ancilla qubits, to obtain the first quantum circuit block, are mathematically represented as:

$$\log N_g + \log N_{ao} + n \; qubits$$

Wherein $\log N_g$ represents the first set of qubits, $\log N_{ao}$ represents the second set of qubits, and $n \; qubits$ represents the plurality of ancilla qubits.

11. The system (100) as claimed in claim 8, wherein (a) the plurality of control qubits composed of the third set of qubits and the fourth set of qubits, and (b) the plurality of ancilla qubits, to obtain the ninth quantum circuit block, are mathematically represented as:

$$\log N_{aux} + 2 \log N_{ao} + n \; qubits$$

wherein $\log N_{aux}$ represents the third set of qubits, $2 \log N_{ao}$ represents the second set of qubits, and *n qubits* represents the plurality of ancilla qubits.

12. The system (100) as claimed in claim 8, wherein the plurality of unentangled quantum processors (122) are configured by the programmed instructions to compute the J matrix from the initial density matrix by performing amplitude amplification on the one or more sequences of bitstrings if there is overlap between the plurality of states.

13. One or more non-transitory machine-readable information storage mediums comprising one or more instructions which when executed by one or more hardware processors cause:

receiving a chemical compound whose one or more properties to be extracted, wherein the chemical compound is one of (i) a molecule, and (ii) a solid;
obtaining a plurality of atomic coordinates of each of a plurality of atoms present in the chemical compound;
determining (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension $N_g$ and $N_{ao}$, and wherein $N_g$ represents a number of points on a numerical grid, and $N_{ao}$ represents a number of basis functions;
determining an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies;
iteratively updating the initial density matrix until a convergence criteria is met, to obtain an final density matrix of the chemical compound, wherein iteratively updating the initial density matrix at each iteration comprises:

(a) computing a direct (J) matrix from the initial density matrix;
(b) determining a correlation exchange matrix based on the collocation matrix and the initial density matrix for local density approximation (LDA) by:

(i) encoding the collocation matrix on (a) a plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix;
(ii) composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block;
(iii) composing the third quantum circuit block with the quantum circuit block for diffusion and the first quantum circuit block that encoded the collocation matrix, to construct a fourth quantum circuit block that encodes an electronic density of the chemical compound;
(iv) putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density;
(v) composing the sixth quantum circuit block with the first quantum circuit block, to create a seventh quantum circuit block that encodes a Z matrix; and
(vi) composing the seventh quantum circuit block with the first quantum circuit block, to create an eighth quantum circuit block that encodes the correlation exchange matrix;

(c) determining a Fock (F) matrix by adding the J matrix and the correlation exchange matrix;
(d) performing a qubitized diagonalization of the F matrix to obtain an intermediate density matrix; and
(e) repeating the steps (a) through (d), until the convergence criteria is met, by considering the intermediate density matrix as the initial density matrix, to obtain the final density matrix of the chemical compound; and

utilizing the final density matrix of the chemical compound, to extract the one or more properties of the chemical compound.

**14.** The one or more non-transitory machine-readable information storage mediums of claim 13, wherein computing the J matrix from the initial density matrix comprises:

encoding the initial density matrix on (a) the plurality of control qubits composed of a third set of qubits and a fourth set of qubits, and (b) the plurality of ancilla qubits, to obtain a ninth quantum circuit block, wherein the third set of qubits is associated with a number of auxiliary basis functions in density fitting approximation of the plurality electron integrals, the fourth set of qubits is associated with the number of basis functions, and the plurality of ancilla qubits are used to store numerical entries of the initial density matrix;

encoding a Cholesky tensor on the ninth quantum circuit block to form a first Cholesky circuit block, wherein the Cholesky tensor is obtained from one or more electron integrals among the plurality of electron integrals;

composing the ninth quantum circuit block with the first Cholesky circuit block and a diffusion operator to create a tenth quantum circuit block that processes the initial density matrix to generate an intermediate state vector;

encoding a transpose of the Cholesky tensor on the tenth quantum circuit block to form a second Cholesky circuit block;

composing the tenth quantum circuit block with the second Cholesky circuit block for processing the intermediate state vector to obtain a plurality of states at the fourth set of qubits in the ninth quantum circuit block; and

reading one or more sequences of bitstrings from the fourth set of qubits to obtain the direct matrix.

FIG. 1

200

Receive a chemical compound whose one or more properties to be extracted, wherein the chemical compound is one of (i) a molecule, and (ii) a solid — 202

Obtain a plurality of atomic coordinates of each of a plurality of atoms present in the chemical compound — 204

Determine (i) a plurality of electron integrals, (ii) a core Hamiltonian matrix, and (iii) a collocation matrix, from the plurality of atomic coordinates of each of the plurality of atoms present in the chemical compound, wherein the collocation matrix is a rectangular matrix of dimension  and , and wherein  represents a number of points on a numerical grid, and  represents a number of basis functions — 206

Determine an initial density matrix of the chemical compound from the core Hamiltonian matrix, wherein the initial density matrix is constructed using (i) a single particles unitary rotation matrix which is obtained by diagonalizing the core Hamiltonian matrix, and (ii) electron occupancies — 208

Iteratively update the initial density matrix until a convergence criteria is met, to obtain an final density matrix of the chemical compound — 210

Utilize the final density matrix of the chemical compound, to extract the one or more properties of the chemical compound — 212

FIG. 2

Compute a direct (J) matrix from the initial density matrix ⟋— 210a

Determine a correlation exchange matrix based on the collocation matrix and the initial density matrix for local density approximation (LDA) by:

Encoding the collocation matrix on (a) the plurality of control qubits composed of a first set of qubits and a second set of qubits, and (b) a plurality of ancilla qubits, to obtain a first quantum circuit block, wherein the first set of qubits is associated with the number of points on the numerical grid, the second set of qubits is associated with the number of basis functions, and the plurality of ancilla qubits are used to store numerical entries of the collocation matrix and the initial density matrix ⟋— 210b

⟋— 210b1

Composing the first quantum circuit block with a quantum circuit block for diffusion and a second quantum circuit block that encodes the initial density matrix on (a) the plurality of control qubits composed of the second set of qubits and (b) an ancilla qubit, to construct a third quantum circuit block ⟋— 210b2

Composing the third quantum circuit block with the quantum circuit block for diffusion and the first quantum circuit block that encoded the collocation matrix, to construct a fourth quantum circuit block that encodes an electronic density of the chemical compound ⟋— 210b3

Putting the fourth quantum circuit block with a fifth quantum circuit block for a phase angle shifted reflector, into a quantum signal processing sequence, to create a sixth quantum circuit block that encodes a Chebyshev polynomial approximation of a nonlinear function of the electronic density, wherein the nonlinear function is a derivative of the electronic energy density with respect to the electronic density ⟋— 210b4

A

FIG. 3A

A

Composing the sixth quantum circuit block with the first quantum circuit block, to create a seventh quantum circuit block that encodes a Z matrix — 210b5

Composing the seventh quantum circuit block with the first quantum circuit block, to create an eighth quantum circuit block that encodes the correlation exchange matrix — 210b6

Determine a Fock (F) matrix by adding the J matrix and the correlation exchange matrix — 210c

Perform a qubitized diagonalization of the F matrix to obtain an intermediate density matrix — 210d

Repeat the steps (210a) through (210d), until the convergence criteria is met, by considering the intermediate density matrix as the initial density matrix, to obtain the final density matrix of the chemical compound — 210e

FIG. 3B

FIG. 4

Encode the initial density matrix on (a) the plurality of control qubits composed of a third set of qubits and a fourth set of qubits, and (b) the plurality of ancilla qubits, to obtain a ninth quantum circuit block, wherein the third set of qubits is associated with a number of auxiliary basis functions in density fitting approximation of the plurality electron integrals, the fourth set of qubits is associated with the number of basis functions, and the plurality of ancilla qubits are used to store numerical entries of the initial density matrix — 210a1

Encode a Cholesky tensor on the ninth quantum circuit block to form a first Cholesky circuit block, wherein the Cholesky tensor is obtained from one or more electron integrals among the plurality of electron integrals — 210a2

Compose the ninth quantum circuit block with the first Cholesky circuit block and a diffusion operator to create a tenth quantum circuit block that processes the initial density matrix to generate an intermediate state vector — 210a3

Encode a transpose of the Cholesky tensor on the tenth quantum circuit block to form a second Cholesky circuit block — 210a4

Compose the tenth quantum circuit block with the second Cholesky circuit block for processing the intermediate state vector to obtain a plurality of states at the fourth set of qubits in the ninth quantum circuit block — 210a5

Read one or more sequences of bitstrings from the fourth set of qubits to obtain the direct matrix — 210a6

FIG. 5

FIG. 6

FIG. 7

Europäisches
Patentamt

European
Patent Office

Office européen
des brevets

# EUROPEAN SEARCH REPORT

**Application Number**

EP 24 22 0403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROSSMANNEK MAX ET AL: "Quantum HF/DFT-embedding algorithms for electronic structure calculations: Scaling up to complex molecular systems", THE JOURNAL OF CHEMICAL PHYSICS, vol. 154, no. 11, 21 March 2021 (2021-03-21), XP093141526, ISSN: 0021-9606, DOI: 10.1063/5.0029536 * the whole document * | 1-14 | INV. G06N10/60 |
| A | TAEHEE KO ET AL: "Implementation of the Density-functional Theory on Quantum Computers with Linear Scaling with respect to the Number of Atoms", ARXIV.ORG, CORNELL UNIVERSITY LIBRARY, 201 OLIN LIBRARY CORNELL UNIVERSITY ITHACA, NY 14853, 13 July 2023 (2023-07-13), XP091563102, * Abstract, I. Introduction, II. Problem setup, III. Quantum algorithms, IV. Numerical results * | 1-14 | |
| A | ROBERT SCHADE ET AL: "Parallel Quantum Chemistry on Noisy Intermediate-Scale Quantum Computers", ARXIV.ORG, CORNELL UNIVERSITY LIBRARY, 201 OLIN LIBRARY CORNELL UNIVERSITY ITHACA, NY 14853, 4 February 2022 (2022-02-04), XP091151034, * Abstract, II. Reduced density-matrix functional theory, III. Hybrid quantum-classical algorithm for the RDMF * | 1-14 | **TECHNICAL FIELDS SEARCHED (IPC)** <br> G06N |

-/--

The present search report has been drawn up for all claims

| Place of search | Date of completion of the search | Examiner |
|---|---|---|
| The Hague | 6 May 2025 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt

European Patent Office

Office européen des brevets

**EUROPEAN SEARCH REPORT**

**Application Number**

EP 24 22 0403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ROSSMANNEK MAX ET AL: "Quantum Embedding Method for the Simulation of Strongly Correlated Systems on Quantum Computers", JOURNAL OF PHYSICAL CHEMISTRY LETTERS, vol. 14, no. 14, 6 February 2023 (2023-02-06), pages 1-8, XP093267643, US ISSN: 1948-7185, DOI: 10.1021/acs.jpclett.3c00330 * page 1 - page 6 * | 1-14 | |
| A | DAS SAMBIT ET AL: "DFT-FE 1.0: A massively parallel hybrid CPU-GPU density functional theory code using finite-element discretization", COMPUTER PHYSICS COMMUNICATION., vol. 280, no. C, 21 March 2022 (2022-03-21), pages 1-55, XP093268612, NL ISSN: 0010-4655, DOI: 10.1016/j.cpc.2022.108473 * Abstract, 2. Real-space Kohn-Sham DFT formulation and finite-element discretization, 3. Numerical methodology, 4. Architecture of the hybrid CPU-GPU implementation * | 1-14 | |
| A | RYAN PEDERSON ET AL: "Large scale quantum chemistry with Tensor Processing Units", ARXIV.ORG, CORNELL UNIVERSITY LIBRARY, 201 OLIN LIBRARY CORNELL UNIVERSITY ITHACA, NY 14853, 13 December 2022 (2022-12-13), XP091392282, DOI: 10.1021/ACS.JCTC.2C00876 * Abstract, Introduction, Results * | 1-14 | TECHNICAL FIELDS SEARCHED (IPC) |

The present search report has been drawn up for all claims

| Place of search | Date of completion of the search | Examiner |
|---|---|---|
| The Hague | 6 May 2025 | Moro Pérez, Gonzalo |

EPO FORM 1503 03.82 (P04C01)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321087616
- US 20220012382 A1
- IN 20232106141